# EUROPÄISCHE PATENTANMELDUNG

(11) **EP 0 949 444 A2**
(43) Veröffentlichungstag der Anmeldung: **13.10.1999**
(21) Anmeldenummer: 99106356.1
(22) Anmeldetag: 29.03.1999
(51) Int. Cl.: F16L 59/14, F16L 11/22

(54) **Flexibler kryogener Schlauch**

(30) Priorität: 09.04.1998 AT 61698
(71) Anmelder: Semperit Aktiengesellschaft Holding, 1031 Wien (AT)
(72) Erfinder: Fidi, Wolfgang, Dipl.-Ing., 2500 Baden (AT); Kern, Eva-Maria, Dr. Dipl.-Ing., 2632 Grafenbach-St. Valentin (AT); Mahlfleisch, Gerhard, 2620 Neunkirchen (AT)
(74) Vertreter: Vinazzer, Edith, Dipl.-Ing.

(57) **Zusammenfassung**

Die Erfindung betrifft einen flexiblen kryogenen Schlauch zum Transport von kalten Medien, insbesondere zum Transport verflüssigter Gase, welcher einen Innenschlauch (2, 2') und zumindest einen Zwischenschlauch (3, 3', 3'') aus kälteflexiblem Material sowie einen Außenschlauch (4, 4') aufweist und mit einer Vakuumisolierung versehen ist. Zwischen dem Innenschlauch (2, 2') und dem diesen benachbarten Zwischenschlauch (3, 3') ist ein von einem Detektionsgas durchströmbarer Zwischenraum (7, 7') gebildet. Eine Vakuumisolierung ist zumindest zwischen dem Außenschlauch (4, 4') und dem diesen benachbarten Zwischenschlauch (3, 3'') vorgesehen. Zumindest in diesem Bereich ist der kryogene Schlauch (1, 1') ferner flexibel verstärkt.

## Beschreibung

Die gegenständliche Erfindung betrifft einen flexiblen kryogenen Schlauch zum Transport von kalten Medien, insbesondere zum Transport verflüssigter Gase, welcher einen Innenschlauch und zumindest einen Zwischenschlauch aus kälteflexiblem Material sowie einen Außenschlauch aufweist und mit einer Vakuumisolierung versehen ist.

Der Anwendungsbereich von flexiblen Schläuchen, die für den Transport von sehr kalten flüssigen Medien, wie beispielsweise verflüssigtem Erdgas, flüssigem Stickstoff, verflüssigter Luft oder flüssigem Wasserstoff geeignet sind, ist breit gestreut. Der Einsatzbereich solcher Schläuche erstreckt sich über viele technische Gebiete, wie beispielsweise die Medizintechnik, die wissenschaftliche Forschung und die Weltraumtechnik.

Auch zum Laden und Entladen von Tankschiffen, die sehr kalte flüssige Medien, insbesondere verflüssigtes Erdgas, transportieren, wäre es wünschenswert, flexible, gut isolierte, gut handhabbare und Sicherheit im Umgang mit dem zu transportierenden Medium bietende Schläuche zur Verfügung zu haben, die außerdem in der Lage sein sollten, die schweren Betriebsbedingungen im Hafen oder auf offener See auszuhalten.

Bislang ist es noch üblich, zum Laden und Entladen von Tankschiffen, die beispielsweise verflüssigtes Erdgas transportieren, starre Rohrleitungen zu verwenden, welche über Kupplungen miteinander verbunden sind. Der mit dem Einsatz von starren Rohrleitungen verbundene Aufwand ist beträchtlich, da es erforderlich ist, schwere und unhandliche Verladeausleger einzusetzen. Ständige Beschädigungen der Rohrleitungen gehören zur Tagesordnung. In vielen Verladegebieten wird darüber hinaus der Einsatz von starren Rohrleitungen durch Bewegungen des Tankschiffes durch Dünung oder Wellen oder auch durch den Tidenhub erschwert. Ein weiteres Problem im Umgang mit manchen verflüssigten Gasen, beispielsweise mit Erdgas, ergibt sich um Zusammenhang mit deren Explosivität, so daß diesbezüglich entsprechende Sicherheitsvorkehrungen getroffen werden müssen.

Darüber hinaus ist es selbstverständlich, daß die verwendeten Transportleitungen, in Abhängigkeit von der Temperatur des zu transportierenden Mediums, auch entsprechend wärmeisoliert sein müssen.

Eine Anzahl von Patenten und Patentanmeldungen befaßt sich bereits mit möglichen Ausführungsformen von flexiblen Schläuchen, von denen manche auch geeignet sein sollen, zum Laden und Entladen von sehr kalte Medien transportierenden Tankschiffen eingesetzt zu werden.

Ein kryogener Schlauch der eingangs genannten Art ist beispielsweise aus der US 4 924 679 A bekannt. Dieser Schlauch besitzt einen das verflüssigte Gas transportierenden Innenschlauch aus einem kälteflexiblem Material, beispielsweise Teflon, über welchem ein weiterer Schlauch, welcher aus einer metallisierten Teflonhülse bestehen kann, angeordnet werden kann. In einem Abstand von diesem inneren Schlauchaufbau ist ein Außenschlauch vorgesehen, wobei der zum Außenschlauch gebildete Zwischenraum mit CO₂ Gas, unter leichtem Druck stehend, gefüllt ist. Das transportierte verflüssigte Gas, beispielsweise Stickstoff, bewirkt ein Verfestigen des CO_{2,} so daß der von diesem nun nicht mehr beanspruchte Raum quasi evakuiert ist. Für bestimmte technische Anwendungen oder die Anwendung bei Forschungseinrichtungen mag ein solcher Schlauch durchaus geeignet sein, kalte verflüssigte Gase in nicht zu großen Mengen zu transportieren. Für einen Einsatzzweck Offshore, zum Laden und Entladen von Tankschiffen, wo auch entsprechende Durchflußmengen gewährleistet sein müssen und der komplette Schlauchaufbau entsprechend abgestimmt sein muß, wäre dieser bekannte Schlauch nicht geeignet.

Die US 4 315 408 A befaßt sich mit einer Schlauchkonstruktion, die vor allem für den Transport von verflüssigtem Petroleumgas vorgesehen ist, welches bei einer Temperatur von -43° C flüssig ist. Mit der in dieser Druckschrift vorgeschlagenen Schlauchkonstruktion soll insbesondere das Problem gelöst werden, daß verflüssigtes Petroleumgas aufgrund seiner geringen Oberflächenspannung schon durch kleinste Kapillaren durchdringen kann. Der Aufbau dieses bekannten Schlauches umfaßt nun einen Innenschlauch zum Transport des verflüssigten Petroleumgases und einen äußeren Schlauch, welcher in einem Abstand zum Innenschlauch angeordnet ist. Der Zwischenraum zwischen Innenschlauch und Außenschlauch wird mit Petroleumgas beschickt, um das gegebenenfalls durch den Innenschlauch diffundierte Petroleumgas aufzunehmen und zur Wiederverflüssigung rückzuführen. Aufgrund der nicht sehr tiefen Temperaturen im Umgang mit verflüssigtem Petroleumgas sind bei diesem bekannten Schlauch keine besonders aufwendigen Isolationsmaßnahmen getroffen und auch nicht notwendig. Sowohl vom Aufbau als auch vom eingesetzten Material wäre daher auch dieser bekannte Schlauch für kältere Medien, etwa verflüssigtes Erdgas oder flüssigen Stickstoff, nicht geeignet.

Aus der DE 31 03 587 A1 ist ein wärmeisolierter Schlauch zur Förderung von verflüssigten Gasen bekannt, der zum Laden und Entladen von Tankschiffen geeignet sein soll. Der Schlauch umfaßt dabei eine innere Rohrleitung mit einer schraubenförmig aufgewickelten, aus Metalldraht bestehenden Spirale, eine Zwischenschicht aus biegsamen Verbundmaterial sowie eine äußere schraubenförmig aufgewickelte Spirale aus Metalldraht, die mit der inneren Spirale identisch ausgebildet ist, jedoch in Bezug auf letztere in Längsrichtung versetzt angeordnet ist. Diese Schlauchkonstruktion soll unter anderem eine gute elastische Verformbarkeit und eine gute mechanische Widerstandsfähigkeit des Schlauches sicherstellen. Auch dieser bekannte Schlauch hat bislang keinen Eingang in eine praktische Umsetzung gefunden, dies vielleicht aus dem Grund, weil es sich bei diesem Schlauch um eine sehr schwere und bezüglich der Flexibilität nicht zufriedenstellende Konstruktion handeln dürfte.

Schließlich offenbart die US 3 490 496 A einen speziell gestalteten Abstandshalter zum Halten bzw. Aufrechterhalten des Abstandes zwischen zwei koaxial angeordneten Schläuchen, beispielsweise zwei Innenschläuchen, eines flexiblen Tiefsttemperatur-Schlauches. Dieser Abstandshalter besteht aus einem flachen Band, welches um seine eigene Achse verdrillt wird, bevor oder während es auf den Inneren der beiden Schläuche aufgelegt wird. Dies ergibt die koaxiale Schlauchanordnung, bei der eine hohe Flexibilität, je nach den eingesetzten Materialien, gewährleistet sein kann.

Die Erfindung hat sich nun die Aufgabe gestellt, einen flexiblen kryogenen Schlauch der eingangs genannten Art mit einer besonderen Eignung für größere Durchflußmengen von sehr kalten Medien, insbesondere von verflüssigten Gasen, mit einer Temperatur von vorzugsweise < -100° C zur Verfügung zu stellen, der zum Laden und Entladen von Tankschiffen besonders vorteilhaft einsetzbar ist.

Gelöst wird die gestellte Aufgabe erfindungsgemäß dadurch, daß zwischen dem Innenschlauch und dem diesen benachbarten Zwischenschlauch ein von einem Detektionsgas durchströmbarer Zwischenraum gebildet ist, und daß zumindest zwischen dem Außenschlauch und dem diesen benachbarten Zwischenschlauch die Vakuumisolierung vorgesehen ist, wobei der Schlauch zumindest in diesem Bereich flexibel verstärkt ist.

Mit den erfindungsgemäßen Maßnahmen wird ein flexibler kryogener Schlauch geschaffen, der bei guter Flexibilität eine gute Wärmeisolierung und ein Sicherheitssystem zur Überwachung der Dichtheit des Innenschlauches und/oder etwaiger Kupplungsteile, die einzelne Teilstücke des Schlauches verbinden, gewährleistet. Die Verstärkung im Bereich der Vakuumisolierung stellt eine entsprechende mechanische Festigkeit in diesem Bereich sicher.

Aufgrund der hervorragenden Kälteflexibilität und Kältebeständigkeit eignet sich als Material für den Innenschlauch sowie für den Zwischenschlauch bzw. die Zwischenschläuche vor allem ein Fluorpolymer oder ein Fluorcopolymer, insbesondere Polfletrafluorethylen.

Der Abstand zwischen den einzelnen im Inneren des kryogenen Schlauches untergebrachten Schläuchen wird auf besonders einfache Weise über entsprechende distanzhaltende Mittel gehalten bzw. aufrechterhalten.

Ein solches distanzhaltendes Mittel kann bei einer ersten Ausführungsform der Erfindung ein spiralförmig gewickeltes Band sein. Ein Band läßt sich bei der Herstellung des Schlauches besonders einfach aufbringen.

Bei einer alternativen, ebenfalls gut handhabbaren Ausführungsvariante des Distanzhalters ist vorgesehen, daß dieser von perforierten Distanzscheiben, die in bestimmten Abständen angeordnet werden, gebildet wird.

Auch für die distanzhaltenden Einrichtungen, das Band oder die Distanzscheiben, ist als Material ein kälteflexibles Material, wie beispielsweise ein Fluorpolymer oder ein Fluorcopolymer, insbesondere Polytetrafluorethylen, besonders geeignet.

Insbesondere zwischen dem Innenschlauch und dem diesen benachbarten Zwischenschlauch kann auf mechanische Distanzhalter verzichtet werden. Hier kann das durchströmende Detektionsgas gleichzeitig als distanzhaltendes Mittel dienen. Dies erfordert lediglich, daß das durchströmende Detektionsgas mit einem höheren Druck durchgeleitet wird als das im Innenschlauch transportierte Medium, so daß ein selbsttätiges Zentrieren des Schlauches und Einstellen eines Zwischenraumes zwischen dem Innenschlauch und dem an diesen anschließenden Zwischenschlauch stattfindet.

Als Detektionsgas eignet sich vor allem ein nicht explosives Gas, beispielsweise Helium, welches auch in ausreichender Menge zur Verfügung gestellt werden kann.

Um den kryogenen Schlauch im Bereich der Vakuumisolierung flexibel zu verstärken, ist vorgesehen, daß der Zwischenschlauch, der die Vakuumisolierung begrenzt, außenseitig mit einer entsprechenden Verstärkung umhüllt wird.

Je nach den Anforderungen bezüglich Druckstabilität und Knickfestigkeit kann es auch von Vorteil sein, wenn der Innenschlauch außenseitig mit einer flexiblen Verstärkung umhüllt wird.

Die Verstärkung, die einen Zwischenschlauch oder den Innenschlauch umgibt, kann unterschiedenlich ausgeführt werden. Um die Flexibilität sicherzustellen, wird jedoch die Verstärkung vorzugsweise aus metallischen und/oder textilen Werkstoffen bestehen, die als Geflecht oder spiralig gewickelt, in einer Lage oder mehrlagig, aufgebracht sind.

Wenn besonders kalte Medien, wie verflüssigtes Erdgas oder verflüssigter Wasserstoff, transportiert werden, kann die Isolierung auf besonders einfache Weise dadurch erhöht werden, daß eine mehrfache, insbesondere doppelte Vakuumisolierung mit zumindest im wesentlichen übereinstimmendem Aufbau vorgesehen wird.

Um zusätzlich an zumindest einer zweiten, vom transportierten Medium weiter weg gelegenen Stelle nochmals eine Überprüfung auf undichte Stellen durchführen zu können, kann zumindest eine der Vakuumisolierungen als Detektionsstelle verwendet werden.

Für den Außenschlauch ist es, sowohl von den Isolierungseigenschaften als auch von der Festigkeit her, meist ausreichend, wenn dieser ein Tieftemperatur-Gummischlauch, insbesondere herkömmlichen Aufbaus, ist.

Bei einer weiteren Ausgestaltung der Erfindung, insbesondere wenn der kryogene Schlauch zum Transport von explosiven Medien vorgesehen ist, wird der Schlauch mit entsprechenden Mitteln zum elektrischen Potentialausgleich zwischen seinen Endstellen versehen.

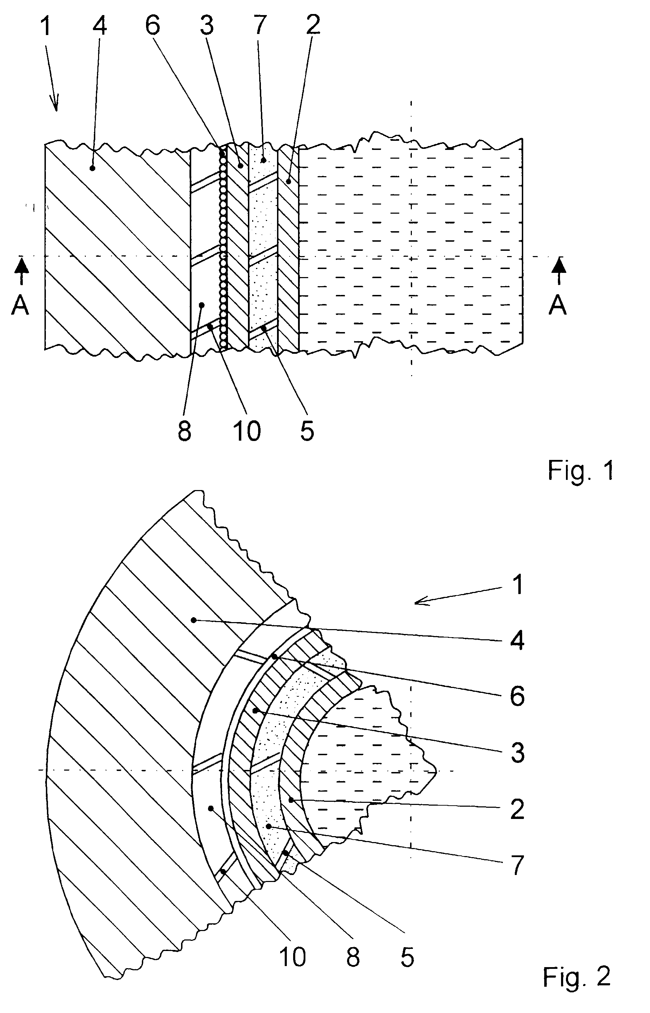

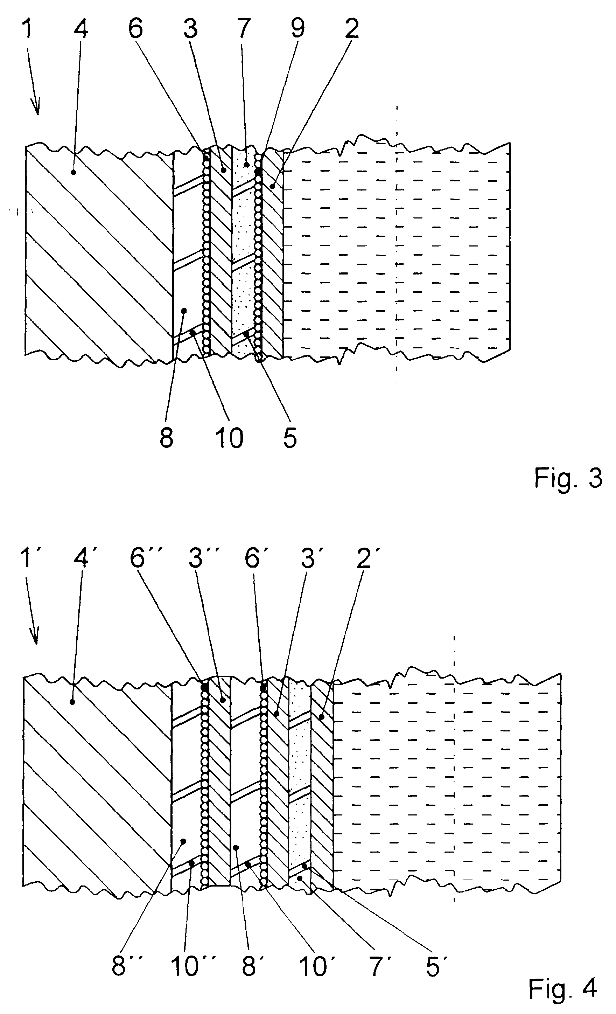

Weitere Merkmale, Vorteile und Einzelheiten der Erfindung werden nun anhand der Zeichnung, die mehrere Ausführungsbeispiele eines erfindungsgemäßen flexiblen kryogenen Schlauches darstellt, näher beschrieben. Die einzelnen Zeichnungsfiguren sind schematische Darstellungen und insbesondere nicht maßstabsgetreu. Fig. 1 zeigt einen Längsschnitt durch einen Abschnitt einer ersten Ausführungsform eines erfindungsgemäß ausgeführten kryogenen Schlauches, Fig. 2 einen Querschnitt durch diesen Schlauch entlang der Linie A-A der Fig. 1. Fig. 3 und Fig.4 zeigen weitere Ausführungsformen des erfindungsgemäßen kryogenen Schlauches im Längsschnitt.

Wie bereits eingangs erwähnt, ist der erfindungsgemäße kryogene Schlauch insbesondere dafür vorgesehen, verflüssigte Gase zu transportieren. Ein bevorzugter Einsatzzweck des erfindungsgemäßen kryogenen Schlauches ist zum Laden und Entladen eines Tankschiffes mit verflüssigtem Erdgas. Verflüssigtes Erdgas besitzt eine Temperatur von ca. -196° C und ist in seiner gasförmigen Phase hoch explosiv, so daß entsprechende Sicherheitsvorkehrungen im Umgang mit verflüssigtem Erdgas zu treffen sind.

Erfindungsgemäß ausgeführte kryogene Schläuche können jedoch auch zum Transport bzw. zum Leiten anderer verflüssigter Gase eingesetzt werden, beispielsweise von flüssigem Stickstoff, verflüssigtem Wasserstoff oder flüssiger Luft.

Wie aus der in Fig. 1 und Fig. 2 dargestellten ersten Ausführungsform ersichtlich ist, besitzt der in seiner Gesamtheit mit 1 bezeichnete kryogene Schlauch einen schichtartigen Aufbau. Von innen nach außen betrachtet sind die wesentlichen Bauteile des kryogenen Schlauches 1 ein Innenschlauch 2, ein in einem Abstand von diesem vorgesehener Zwischenschlauch 3 und ein ebenfalls in einem Abstand von diesem angeordneter Außenschlauch 4. Der Innenschlauch 2 ist demnach jener Schlauch, der direkt mit dem zu leitenden Medium, also beispielweise mit verflüssigtem Erdgas, in Berührung kommt.

Der Innenschlauch 2 wird daher aus einem entsprechenden kälteflexiblen, das heißt tieftemperaturbeständigen und gleichzeitig flexiblen Material, insbesondere aus einem Fluorpolymer oder ein Fluorcopolymer, beispielsweise Polytetrafluorethylen, hergestellt, und besitzt eine Wandstärke von einigen Millimetern, insbesondere 2 bis 5mm. Ein geeignetes Material ist daher beispielsweise das unter der Markenbezeichnung Teflon (Markeninhaber E.I. Dupont) bekannte Material. Dieses Material ist sogar zum Leiten bzw. zum Transport von Medien, die eine Temperatur unter -200° C besitzen, geeignet.

Auch der Zwischenschlauch 3 wird aus einem derartigen Material, demnach insbesondere aus PTFE, und ebenfalls in einer Wandstärke von einigen Millimetern, vorzugsweise 2 bis 5mm, hergestellt.

Der Aufbau des Schlauches ist erfindungsgemäß so ausgeführt, daß zweifache Sicherheitsvorkehrungen zur Überprüfung der Dichtheit getroffen werden können und gleichzeitig eine optimale Isolierung möglich ist.

Wie schon erwähnt, ist zwischen dem Innenschlauch 2 und dem Zwischenschlauch 3 ein Zwischenraum 7 gebildet, der, wie es in Fig. 1 und 2 dargestellt ist, durch Distanzhalter 5 gehalten bzw. aufrecht erhalten wird. Beim dargestellten Ausführungsbeispiel besteht dieser Distanzhalter 5 aus einem auf die Außenseite des Innenschlauches 2 spiralig gewickelten Band aus einem kälteflexiblen Material. Es bietet sich daher an, als Material für den Distanzhalter 5 eines aus der Gruppe der bereits oben für Innenschlauch 2 und Zwischenschlauch 3 erwähnten Materialien zu wählen, insbesondere Teflon.

Im Betrieb, wenn also durch den Innenschlauch 2 verflüssigtes Gas transportiert wird, wird der Zwischenraum 7 mit einem Gas, welches als Detektionsgas für etwaige Undichtheiten des Innenschlauches 2 dient, durchströmt. Als Detektionsgas wird beispielsweise Helium eingesetzt. Über geeignete Detektoren läßt sich somit feststellen, ob undichte Stellen im Innenschlauch 2 oder auch bei Verbindungs- bzw. Kupplungsteilen, die die einzelnen Teile des erfindungsgemäßen Schlauches miteinander verbinden und die nicht Gegenstand der vorliegenden Erfindung sind, aufgetreten sind.

Zwischen dem Zwischenschlauch 3 und dem noch zu beschreibenden Außenschlauch 4 befindet sich ebenfalls ein Zwischenraum 8. Auch dieser Zwischenraum 8 wird durch Distanzhalter 10 gehalten bzw. aufrecht erhalten. Der an dieser Stelle vorgesehene Distanzhalter 10 kann von seiner Ausführung her mit dem Distanzhalter 5 übereinstimmen, besteht daher bevorzugt aus einem spiralig um die Außenseite des Zwischenschlauches 3 gewickelten Band aus Teflon. Der Zwischenraum 8 wird zur Schaffung einer Vakuumisolierung beim Betrieb des Schlauches 1 evakuiert, was es erforderlich macht, eine Verstärkung 6 vorzusehen, die um die Außenseite des Zwischenschlauches 3 plaziert wird. Diese Verstärkung 6 hat entsprechend flexibel zu sein und besteht beispielsweise aus metallischen und/oder textilen Werkstoffen und wird als Geflecht oder spiralig gewickelt in einer Lage oder in mehreren Lagen aufgebracht.

Dabei wird vorteilhafterweise vorgesehen, den evakuierten Zwischenraum 8 ebenfalls als Detektionsstelle einzusetzen, um festzustellen, ob gegebenenfalls an dieser Stelle Spuren des transportierten Mediums feststellbar sind, was auf undichte Stellen hinweist. Auch dies kann durch aus dem Stand der Technik bekannte und geeignete Detektoren durchgeführt werden.

Der den kryogenen Schlauch 1 außen umgebende Außenschlauch 4 kann ein herkömmlicher Gummischlauch, insbesondere ein Tieftemperaturschlauch sein, der aus ausreichend kälteflexiblen und kältebeständigen Kautschukmischungen hergestellt ist. Geeignet ist beispielsweise ein Schlauch herkömmlichen Aufbaus mit einer Innenseele, ein oder mehr Verstärkungslagen und einer Außendecke. Innenseele und Außendecke werden dabei auf der Basis von Kautschukmischungen erstellt, deren Kautschukkomponente (n), wie erwähnt, als kälteflexibel bekannt sind, beispielsweise Naturkautschuk enthalten.

Erwähnt sei ferner, daß das beschriebene zweifache Sicherheitssystem zum Feststellen von undichten Stellen im kryogenen Schlauch bzw. im Bereich der Kupplungsteile bevorzugt so eingesetzt wird, daß ein Unterbrechen, ein Abschalten des Transportes des kalten Mediums, des verflüssigten Gases, erst dann erfolgt, wenn im evakuierten Zwischenraum 8 Spuren des Mediums in einer gewissen Konzentration feststellbar sind. Selbstverständlich besteht auch die Möglichkeit, Maßnahmen zu treffen, wenn bereits im Detektionsgas gewisse Konzentrationen des transportierten Mediums festgestellt werden. Hier wird also im Rahmen der Erfindung ein Sicherheitssystem vorgeschlagen, welches insbesondere für den Transport jener verflüssigten Gase geeignet ist, die in der gasförmigen Phase hoch explosiv sind, wie beispielsweise Erdgas oder Wasserstoff.

Das in Fig. 3 dargestellte Ausführungsbeispiel entspricht jenem gemäß Fig. 2, wobei hier die übereinstimmenden Bauteile mit gleichen Bezugsziffern versehen sind, auf eine gesonderte Wiederholung der Beschreibung jedoch verzichtet wird. Abweichend von dem in Fig. 1 dargestellten Ausführungsbeispiel besitzt der in Fig. 3 dargestellte kryogene Schlauch 1 eine zweite Verstärkung 9, die an der Außenseite des Innenschlauches 2 angeordnet ist. Die Verstärkung 9 kann nun wie die Verstärkung 6, die bereits zu Fig. 1 beschrieben wurde, ausgeführt werden. Auch den Innenschlauch 2 mit einer Verstärkung zu versehen, kann dann erforderlich sein, wenn der Schlauch 1 für eine größere Durchflußmenge des zu transportierenden Mediums ausgelegt wird bzw. die Anforderungen bezüglich Druckstabilität und Knickfestigkeit entsprechend sind.

Fig. 4 zeigt eine weitere Ausführungsvariante eines erfindungsgemäß ausgeführten kryogenen Schlauches 1'. Dieser umfaßt einen Innenschlauch 2', einen von diesem über einen Zwischenraum 7' beabstandeten Zwischenschlauch 3', einen weiteren vom ersten Zwischenschlauch 3' beabstandeten zweiten Zwischenschlauch 3'' und schließlich, ebenfalls in einem Abstand vom Zwischenschlauch 3'', einen Außenschlauch 4'. Der Innenschlauch 2' und die beiden Zwischenschläuche 3', 3'' können von Material und Aufbau her dem Innenschlauch 2 und dem Zwischenschlauch 3 aus Fig. 1 entsprechen. Dies trifft auch auf den Außenschlauch 4' zu. Der Abstand zwischen den einzelnen Schläuchen 2', 3', 3'', 4' wird über Distanzhalter 5', 10', 10'', die von ihrer Ausführung her den anhand des ersten Ausführungsbeispieles beschriebenen entsprechen können, sichergestellt. Der Zwischenraum 7' zwischen dem Innenschlauch 2' und dem Zwischenschlauch 3' ist ebenfalls dafür vorgesehen, von einem gasförmigen Detektionsmedium, beispielsweise Helium, durchströmt zu werden.

Die beiden Zwischenschläuche 3' und 3'' sind außenseitig jeweils mit einer Verstärkung 6',6'' umhüllt, deren Aufbau wie bereits beschrieben erfolgen kann.

In den Zwischenräumen 8' und 8'', die zwischen den beiden Zwischenschläuchen 3' und 3'' sowie dem Zwischenschlauch 3'' und dem Außenschlauch 4' gebildet sind, ist nun vorgesehen, eine Vakuumisolierung zu schaffen, so daß bei dem in dieser Zeichnungsfigur dargestellten Ausführungsbeispiel quasi eine Verdoppelung der Vakuumisolierung aus Fig. 1 und Fig. 3 vorliegt. Dabei kann das Vakuum in beiden Zwischenräumen 8', 8'' oder nur in einem von beiden dafür eingesetzt werden, undichte Stellen aufzuspüren, indem über geeignete Detektoren Spuren des transportierten Mediums festgestellt werden können. Eine derartige doppelte oder bei Bedarf auch mehrfache Isolation nach außen wird insbesondere für solche Einsatzfälle vorgesehen werden, wo das zu transportierende Medium eine sehr niedrige Temperatur hat. Dieser Aufbau könnte daher beispielsweise beim Transport von verflüssigtem Erdgas oder auch beim Transport von verflüssigtem Wasserstoff eingesetzt werden.

Es gibt eine Reihe weiterer Ausgestaltungsmöglichkeiten bzw. Varianten für die Ausgestaltung eines erfindungsgemäßen kryogenen Schlauches, die gesondert nicht dargestellt sind. Dazu gehört beispielsweise, daß beim Ausführungsbeispiel gemäß Fig. 4 auch an der Außenseite des Innenschlauches 2' eine zumindest einlagige Verstärkung angeordnet werden kann.

An Stelle der Ausführung der Distanzhalter aus Bändern aus Telfon oder ähnlichem Material können auch Distanzhalterscheiben, entsprechend perforiert oder gelocht, in bestimmten Abständen angeordnet werden. Solche Scheiben könnten senkrecht zur Durchströmrichtung oder zu dieser schräg gestellt angeordnet werden. Dabei kann im Zwischenraum zwischen dem Innenschlauch 2, 2' und dem benachbarten Zwischenschlauch 3, 3' auf das Vorsehen mechanischer Distanzhalter sogar verzichtet werden, wenn hier vorgesehen wird, daß das Detektionsmedium, das diesen Zwischenraum durchströmende Gas, mit einem höheren Druck durchgeleitet wird, als das im Innenschlauch transportierte Medium. In diesem Fall erfolgt bei der Inbetriebnahme des Schlauches, wenn erstmalig das Detektionsgas in den betreffenden Zwischenraum geleitet wird, ein Zentrieren des Schlauches und ein selbsttätiges Einstellen eines Zwischenraumes zwischen dem Innenschlauch und dem an diesen anschließenden Zwischenschlauch.

Bei einer weiteren, nicht dargestellten Ausführungsform der Erfindung kann vorgesehen werden, den Zwischenschlauch bzw. die Zwischenschläuche auch mit einer gewellten Struktur auszustatten, was die Flexibilität erhöht. Für den Innenschlauch ist es aufgrund der Sicherstellung eines möglichst ungehinderten Transportes des Mediums eher günstig, eine glatte Ausführung zu wählen.

Bei einer Reihe von verflüssigten Gasen ist es ferner erforderlich, dafür zu sorgen, daß ein Potentialausgleich zwischen den Endstellen des Schlauches möglich ist. Dies ist insbesondere bei explosiven Materialien, verflüssigtem Erdgas oder verflüssigtem Wasserstoff, günstig. Es ist daher für eine elektrisch leitfähige Verbindung zwischen diesen Endstellen zu sorgen. Aus diesem Grund kann beispielsweise vorgesehen werden, zumindest einen der im Inneren des kryogenen Schlauches verlaufenden Schläuche, dies kann der Innenschlauch oder einer der Zwischenschläuche sein, leitfähig auszurüsten, indem, wie es aus den Stand der Technik bekannt ist, deren Material bereits elektrisch leitfähig ist. Als Alternative oder zusätzlich dazu können elektrische Leiter, insbesondere Kupferlitzen, beispielsweise in zumindest einer der vorgesehenen Verstärkungen, angeordnet werden.

## Patentansprüche

1. Flexibler kryogener Schlauch zum Transport von kalten Medien, insbesondere zum Transport verflüssigter Gase, welcher einen Innenschlauch und zumindest einen Zwischenschlauch aus kälteflexiblem Material sowie einen Außenschlauch aufweist und mit einer Vakuumisolierung versehen ist, dadurch gekennzeichnet, daß zwischen dem Innenschlauch (2,2') und dem diesem benachbarten Zwischenschlauch (3,3') ein von einem Detektionsgas durchströmbarer Zwischenraum (7,7') gebildet ist, und daß zumindest zwischen dem Außenschlauch (4,4') und dem diesen benachbarten Zwischenschlauch (3,3'') die Vakuumisolierung vorgesehen ist, wobei der Schlauch (1,1') zumindest in diesem Bereich flexibel verstärkt ist.

2. Flexibler kryogener Schlauch nach Anspruch 1, dadurch gekennzeichnet, daß der Innenschlauch (2,2') sowie der Zwischenschlauch bzw. die Zwischenschläuche (3, 3', 3'') aus einem Fluorpolymer oder einem Fluorcopolymer, insbesondere aus Polytetrafluorethylen, hergestellt sind.

3. Flexibler kryogener Schlauch nach Anspruch 1 oder 2, dadurch gekennzeichnet, daß im Inneren der Abstand zwischen den Schläuchen über distanzhaltende Mittel gehalten wird.

4. Flexibler kryogener Schlauch nach Anspruch 3, dadurch gekennzeichnet, daß das distanzhaltende Mittel ein spiralförmig gewickeltes Band (5, 5', 10, 10', 10'') ist.

5. Flexibler kryogener Schlauch nach Anspruch 3, dadurch gekennzeichnet, daß das distanzhaltende Mittel perforierte Distanzscheiben sind, die in bestimmten Abständen angeordnet sind.

6. Flexibler kryogener Schlauch nach einem der Ansprüche 3 bis 5, dadurch gekennzeichnet, daß das distanzhaltenden Mittel aus einem kälteflexiblen Material, insbesondere aus einem Fluorpolymer oder einem Fluorcopolymer, vorzugsweise aus Polytetrafluorethylen, hergestellt ist.

7. Flexibler kryogener Schlauch nach Anspruch 3, dadurch gekennzeichnet, daß das zwischen dem Innenschlauch (2,2') und dem diesem benachbarten Zwischenschlauch (3,3') durchströmende Detektionsgas das distanzhaltende Mittel ist.

8. Flexibler kryogener Schlauch nach einem der Ansprüche 1 bis 7, dadurch gekennzeichnet, daß das Detektionsgas Helium ist.

9. Flexibler kryogener Schlauch nach einem der Ansprüche 1 bis 8, dadurch gekennzeichnet, daß der Zwischenschlauch (3, 3, 3'') im Bereich der Vakuumisolierung außenseitig mit einer flexiblen Verstärkung (6, 6', 6'') umhüllt ist.

10. Flexibler kryogener Schlauch nach einem der Ansprüche 1 bis 9, dadurch gekennzeichnet, daß auch der Innenschlauch (2,2') außenseitig mit einer flexiblen Verstärkung (9) umhüllt ist.

11. Flexibler kryogener Schlauch nach einem der Ansprüche 1 bis 10, dadurch gekennzeichnet, daß die Verstärkung (6, 6', 6'', 9) aus metallischen und/oder textilen Werkstoffen besteht und als Geflecht oder spiralig gewickelt, in einer Lage oder mehrlagig, aufgebracht ist.

12. Flexibler kryogener Schlauch nach einem der Ansprüche 1 bis 11, dadurch gekennzeichnet, daß er eine mehrfache, insbesondere doppelte, Vakuumisolierung mit zumindest im wesentlichen übereinstimmenden Aufbau besitzt.

13. Flexibler kryogener Schlauch nach Anspruch 12, dadurch gekennzeichnet, daß zumindest eine der Vakuumisolierungen als Detektionsstelle zum Feststellen etwaiger undichter Stellen eingesetzt wird.

14. Flexibler kryogener Schlauch nach einem der Ansprüche 1 bis 13, dadurch gekennzeichnet, daß der Außenschlauch (4,4') ein Tieftemperatur-Gummischlauch, insbesondere herkömmlichen Aufbaus, ist.

15. Flexibler kryogener Schlauch nach einem der Ansprüche 1 bis 14, dadurch gekennzeichnet, daß er mit Mitteln zum elektrischen Potentialausgleich zwischen seinen Endstellen versehen ist.
